# EUROPEAN PATENT SPECIFICATION

(11) **EP 4 461 401 B1**
(45) Date of publication and mention of the grant of the patent: **15.10.2025**
(21) Application number: 23807915.6
(22) Date of filing: 18.05.2023
(51) Int. Cl.: B01F 35/71, B01F 35/214, B01F 35/22, H01M 4/02, H01M 10/00, B01F 101/59, B65G 53/24, B65G 53/52, B65B 37/04, H01M 4/04

(54) **POWDER TRANSFER SYSTEM**
PULVERÜBERTRAGUNGSSYSTEM
SYSTÈME DE TRANSFERT DE POUDRE

(30) Priority: 20.05.2022 KR 20220061721
(43) Date of publication of application: 13.11.2024
(73) Proprietor: LG Energy Solution, Ltd., Seoul 07335 (KR)
(72) Inventor: BANG, Woong Ju, Daejeon 34122 (KR); KOO, Jae Pil, Daejeon 34122 (KR); SHIN, Sung Jong, Daejeon 34122 (KR); SON, Jae Huoung, Daejeon 34122 (KR)
(74) Representative: Plasseraud IP
(86) International application number: PCT/KR2023/006720
(87) International publication number: WO 2023/224396

(56) References cited:
- JP-A- 2000 185 824
- JP-A- 2000 185 824
- JP-A- 2003 226 427
- JP-A- 2008 221 116
- JP-A- 2009 236 383
- JP-A- H0 899 718
- JP-A- S57 182 077
- JP-A- S61 118 665
- KR-A- 20050 091 186
- KR-A- 20050 091 186
- KR-A- 20170 020 516

## Description

### Technical Field

The present invention relates to a powder transfer system and a powder transfer method, and specifically, relates to a powder transfer system and a powder transfer method capable of preventing clogging of a transfer pipe by powder by monitoring a transfer state of powder and applying vibration to the transfer pipe in an abnormal section.

This application claims the benefit of priority based on Korean Patent Application No. 10-2022-0061721 dated May 20, 2022.

### Background Art

Processes for manufacturing an electrode of a secondary battery are divided into a slurry manufacturing process, a process of coating a slurry on a current collector, a rolling process, a slitting process, and a drying process.

The slurry is a mixture of an active material, a conductive material, a binder, and a solvent. The active material and the conductive material are dry-mixed in powder forms. Thereafter, the active material and the conductive material are wet-mixed in the solvent in which the binder is dissolved to form the slurry.

Various active materials are used according to the product type of the secondary battery, where it has each of different characteristics depending on the type of the active material. Depending on the type of active material, there are differences in the time when the respective raw materials are introduced into a mixing device, the time when the respective raw materials are mixed in a mixing device, and the like. Accordingly, there has been a problem that in the active material taking a long time for introduction to the mixing device, productivity is lowered.

Meanwhile, if the active material is agglomerated in the pipe when the active material is transferred, the transfer time varies, so that it is necessary to disperse the agglomerated active material by monitoring this and confirming the location of the agglomerated active material.

KR 2005 0091186 A discloses an apparatus for preventing a granular grain transferring pipe from blocking according to the preamble of claim 1. JP 2000 185824 A discloses a device for and method of detecting clogging in hopper. JP S57182077 A discloses a method of preventing clogging of transport piping for repair material of inner wall of metallurgical smelting. JP S61118665 A discloses an apparatus for detecting flow of sand and the like. JP H0899718 A discloses a pneumatic transporting device. JP 2003226427 A discloses a powdery and granular material supply equipment to reaction furnace and its operating method.

### Disclosure

### Technical Problem

The present invention is intended to provide a powder transfer system and a powder transfer method capable of preventing clogging of a transfer pipe by the powder by monitoring the transfer of the powder used in the slurry manufacturing process and applying vibration to the transfer pipe in an abnormal section.

### Technical Solution

In order to solve the above-described technical problem, a powder transfer system is laid out in appended claim 1.

Also, the control part may be provided to control the operation of the vibration unit for each section of the transfer pipe based on a result of comparing the vibration data obtained from the sensing unit for each section of the transfer pipe and the normal vibration data for each section stored in advance.

In addition, the control part may be provided so that the loading height of the powder under transfer is calculated based on vibration data obtained from the plurality of vibration sensors provided along the loading height direction of the powder in the relevant section of the transfer pipe, and the operation of the vibration unit is controlled according to the calculated height.

Furthermore, the control part may be provided to adjust a vibration intensity of the vibration unit based on the difference between the calculated powder loading height and the preset normal loading height.

Also, the control part may be provided to increase the vibration intensity of the vibration unit in proportion to the difference between the calculated powder loading height and the preset normal loading height.

In addition, the normal loading height may be a height within a range of 50% (0.5h) to 70% (0.7h) of the total height (h) based on the bottom surface of the transfer pipe.

Furthermore, the system may further comprise a monitoring part displaying loading height information of the powder under transfer for each section of the transfer pipe.

Also, the vibration unit may be an ultrasonic vibration vibrator.

In addition, the system may further comprise a powder input part supplying the powder to the transfer pipe, a metering hopper accommodating the powder transferred along the transfer pipe, and a vacuum pump provided between the metering hopper and the transfer pipe and applying a vacuum pressure to the transfer pipe so that the powder is transferred to the metering hopper along the transfer pipe.

Furthermore, the control part may be provided to adjust the transfer speed of the powder by adjusting the strength of the vacuum pressure of the vacuum pump.

Also, the system may further comprise a first on-off valve provided between the powder input part and the transfer pipe, and the control part may adjust the input amount of the powder supplied to the transfer pipe by controlling the first on-off valve.

In addition, the system may further comprise a supply pipe into which the powder measured in the metering hopper is introduced, and a mixing part connected to the supply pipe.

Furthermore, the supply pipe may have a plurality of sections along the transfer direction of the powder toward the mixing part.

Also, the system may further comprise a plurality of sensing units provided for each section of the supply pipe, and provided to detect vibration of the supply pipe upon powder transfer for each section, and a vibration unit provided to apply vibration to a section adjacent to the metering hopper among the plurality of sections.

In addition, the control part may be provided to control the operation of the vibration unit of the supply pipe based on the vibration data obtained for each section in the supply pipe.

### Advantageous Effects

As described above, the powder transfer system related to one example of the present invention has the following effects.

It is possible to monitor the powder transfer state based on the vibration data obtained from the transfer pipe during powder transfer and the preset normal vibration data, and it is possible to apply vibration to the region of the transfer pipe determined to be an abnormal section.

Also, by individually applying vibration to each region of the transfer pipe or adjusting the intensity of vibration, it is possible to prevent the powder from clogging the transfer pipe, and it is possible to smoothly transfer the powder.

In addition, it is possible to improve the efficiency of the slurry preparing process by improving the powder transfer efficiency in the slurry manufacturing process.

### Description of Drawings

Figure 1 is a schematic diagram showing a powder transfer system according to one example of the present invention.
Figure 2 is a configuration diagram schematically showing a powder transfer system according to one example of the present invention.
Figures 3 and 4 show an operating state of the powder transfer system when the powder is transferred along the transfer pipe shown in Figure 1.
Figure 5 is a schematic diagram showing a metering hopper and a mixing part of a powder transfer system.

### Mode for Invention

Hereinafter, a powder transfer system according to one example of the present invention will be described in detail with reference to the accompanying drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

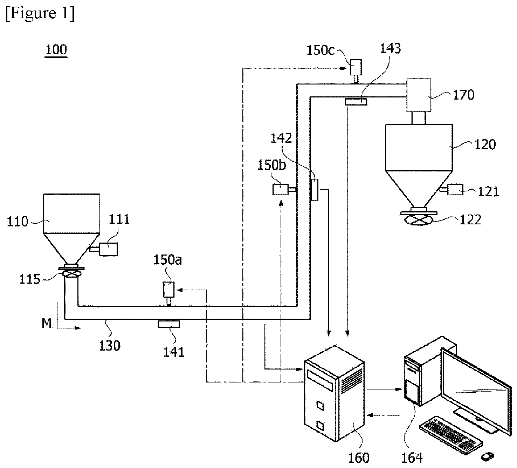

Figure 1 is a schematic diagram showing a powder transfer system (100) according to one example of the present invention.

Referring to Figure 1, the powder transfer system (100) comprises a transfer pipe (130), through which powder is transferred, having a plurality of sections along the powder transfer direction (M), a plurality of sensing units (141, 142, 143) provided for each section of the transfer pipe (130) and provided to detect vibration of the transfer pipe when the powder is transferred for each section, a plurality of vibration units (150a, 150b, 150c) provided to apply vibration to each section of the transfer pipe (130), and a control part 160 provided to individually control operation of the vibration unit (150a 150b, 150c) for each section of the transfer pipe (130) based on vibration data obtained from the sensing units (141, 142, 143) for each section of the transfer pipe (130).

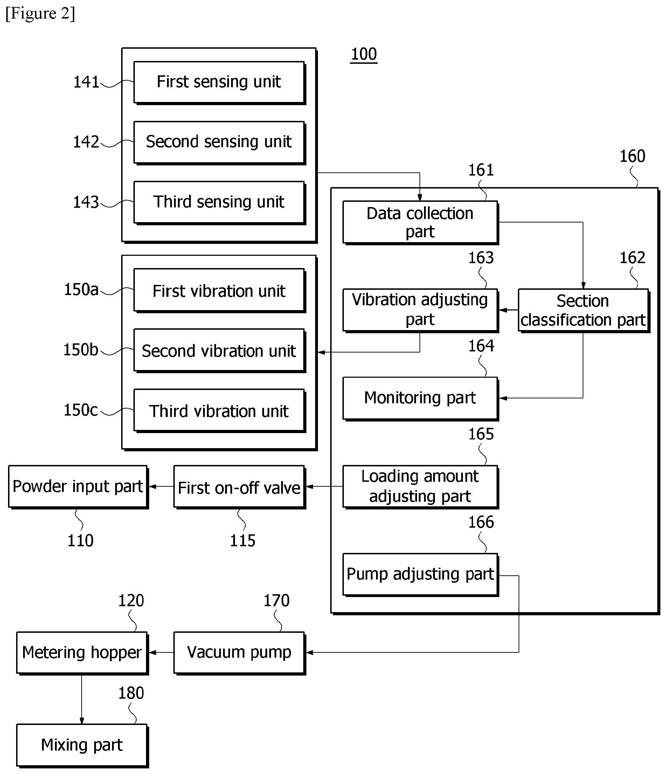

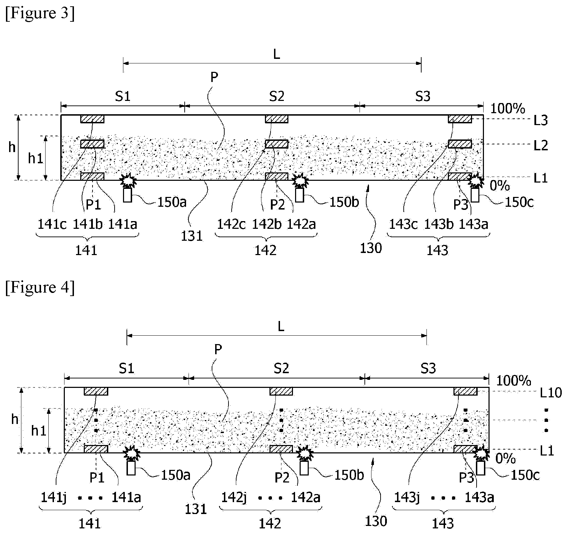

Figure 2 is a configuration diagram schematically showing a powder transfer system (100) according to one example of the present invention, and Figures 3 and 4 show an operating state of the powder transfer system when the powder (P) is transferred along the transfer pipe (130) shown in Figure 1.

In addition, the powder transfer system (100) may comprise a powder input part (120) supplying the powder to the transfer pipe (130), a metering hopper (120) accommodating the powder transferred along the transfer pipe (130), and a vacuum pump (170) provided between the metering hopper (120) and the transfer pipe (130) and applying a vacuum pressure to the transfer pipe (130) so that the powder is transferred to the metering hopper (120) along the transfer pipe (130). Furthermore, the control part (160) may be provided to adjust the transfer speed of the powder by adjusting the strength of the vacuum pressure of the vacuum pump (170).

Referring to Figure 1, the powder transfer system (100) related to one example of the present invention may comprise a powder input part (110), a metering hopper (120), a transfer pipe (130), and sensing units (141, 142, 143), vibration units (150a, 150b, 150c), a control part (160), and a vacuum pump (170). In addition, the system (100) may comprise a first on-off valve (115) provided between the powder input part (110) and the transfer pipe (130).

The transfer pipe (130) connects the powder input part (110) and the metering hopper (120). The transfer pipe (130) is a pipe through which the powder (P) is transferred from the powder input part (110) to the metering hopper (120). The plurality of sensing units (141, 142, 143) and the plurality of vibration units (150a, 150b, 150c) are installed in the transfer pipe (130).

The transfer pipe (130) has a plurality of sections (S1, S2, S3) along the powder transfer direction (M), and the sensing units (141, 142, 143) and the vibration units (150a, 150b, 150c) are provided in the transfer pipe (130) for each preset section (S1, S2, S3) in the longitudinal direction (L) of the transfer pipe (130). In such a structure, according to one example of the present invention, it is possible to monitor the transfer state of the powder (P) for each section by dividing the transfer pipe (130) into a plurality of sections.

The number of sections in the transfer pipe (130) may be variously set in consideration of the length of the transfer pipe (P) and characteristics of the active material, and the like. For convenience of explanation, in this example, the transfer pipe (130) may be divided into three sections (S1, S2, S3) along the longitudinal direction (L) of the transfer pipe (130), and each section (S1, S2, S3) may be referred to as a first section (S1) to a third section (S3) along the powder transfer direction (M).

Here, the first section (S1) may be a section adjacent to the powder input part (110), and the third section (S3) may be a section adjacent to the metering hopper (120). Also, the second section (S2) may be a section between the first section (S1) and the third section (S3).

For convenience of explanation, in this document, the sensing unit and the vibration unit installed in the first section (S1) of the transfer pipe (130) may be referred to as a first sensing unit (141) and a first vibration unit (150a). Similarly, the sensing unit and the vibration unit installed in the second section (S2) of the transfer pipe (130) may be referred to as a second sensing unit (142) and a second vibration unit (150b), and the sensing unit and the vibration unit installed in the third section (S3) of the transfer pipe (130) may be referred to as a third sensing unit (143) and a third vibration unit (150c).

The first sensing unit (141) is provided in the first section (S1) and detects the transfer state of the powder (P) passing through the first section (S1). Also, the second sensing unit (142) is provided in the second section (S2) and detects the transfer state of the powder passing through the second section (S2). In addition, the third sensing unit (143) is provided in the third section (S3) and detects the transfer state of the powder passing through the third section (S3). Furthermore, each of the sensing units (141 to 143) may comprise one or more vibration sensors for detecting vibration of the transfer pipe at installation locations.

The first sensing unit (141) to the third sensing unit (143) provide respective sensing data (vibration data) to the control part (160). That is, each of the sensing units (141 to 143) detects vibration data for each position at the installed position when the powder is transferred. In particular, compared to a liquid slurry, in the case of the powder (active material), it may be advantageous to detect it through the vibration sensor, and it is possible to eliminate agglomeration of the powder by physical impacts of a vibrator.

In such a structure, the control part (160) is provided to control the operation of the vibration unit for each section of the transfer pipe (130) based on a result of comparing the vibration data obtained from the sensing units (141 to 143) for each section (S1, S2, S3) of the transfer pipe (130) and the normal vibration data for each section (S1, S2, S3) stored in advance.

As one example, the vibration unit may be an ultrasonic vibration vibrator.

The control part (160) determines each section as a "normal section" or an "abnormal section" by comparing the vibration data obtained from the sensing unit for each section and the preset normal vibration data, and may operate the vibration unit installed in the abnormal section.

The control part (160) compares the vibration data obtained from the sensing units (141 to 143) for each section (S1, S2, S3) and the normal vibration data for each section (S1, S2, and S3) stored in advance to determine the relevant section as the normal section when it is determined to be in the normal range. At this time, it does not operate the vibration unit provided in the normal section. Unlike this, the control part (160) may compare the vibration data obtained from the sensing units (141 to 143) for each section (S1, S2, S3) and the normal vibration data for each section (S1, S2, and S3) stored in advance to determine the relevant section as the abnormal section when it is determined to be in the abnormal range. At this time, it operates the vibration unit provided in the abnormal section, and the vibration is applied to the relevant section by the vibration unit.

Also, when the powder (P) is transferred, the sensing unit (141 to 143) comprises a plurality of vibration sensors disposed apart from each other along the loading height direction (h) of the powder for each section of the transfer pipe (130). At this time, the plurality of vibration sensors may be provided at different heights, respectively, based on the bottom surface (131) of the transfer pipe (130).

In addition, the control part (160) is provided to control the operation of the vibration unit provided in the relevant section based on a result of comparing the vibration data obtained from the plurality of vibration sensors in the section and the normal vibration data for each height stored in advance. That is, it may operate only the vibration unit of the section determined to be within the abnormal range without operating the vibration unit of the section determined to be within the normal range.

Furthermore, the control part may be provided so that the loading height (h1) of the powder under transfer is calculated based on vibration data obtained from the plurality of vibration sensors provided along the loading height direction (h) of the powder in the relevant section of the transfer pipe, and the operation of the vibration unit is controlled according to the calculated height.'

In addition, the control part (160) may be provided to adjust a vibration intensity of the vibration unit based on the difference between the calculated powder loading height (h1) and the preset normal loading height. That is, the control part (160) may operate the vibration unit when the calculated powder loading height (h1) is greater than the preset normal loading height, and the higher the difference between the calculated powder loading height (h1) and the preset normal loading height, the control part (160) may further increase the intensity of vibration of the vibration unit.

As one example, the control part (160) may be provided to increase the vibration intensity of the vibration unit in proportion to the difference between the calculated powder loading height and the preset normal loading height.

As one example, the normal loading height may be a height within a range of 50% (0.5h) to 70% (0.7h) of the total height (h) based on the bottom surface (131) of the transfer pipe (130).

Hereinafter, referring to Figure 3, a case in which the transfer pipe (130) is divided into three sections (S1, S2, S3), and three vibration sensors are provided for each section along the loading height direction (h) of the powder (P) will be explained as an example.

Referring to Figure 3, in order to determine the normal section and the abnormal section, in the loading height direction (h) of the powder (P) transferred along the transfer pipe (130), a plurality of levels having different relative heights with respect to the bottom surface (131) of the transfer pipe (130) may be preset, and each sensing unit may comprise a plurality of vibration sensors provided at positions corresponding to the respective levels.

That is, each of the sensing units (141, 142, 143) comprises a plurality of sensors (vibration sensors) installed apart from each other along the loading height direction (h) of the powder in the transfer pipe (130) to correspond to each level.

For convenience of explanation, the plurality of vibration sensors of the first sensing unit (141) provided in the first section (S1) are referred to as first sensors (141a to 141c), the plurality of vibration sensors of the second sensing unit (142) provided in the second section (S2) are referred to as second sensors (142a to 142c), and the plurality of vibration sensors of the third sensing unit (143) provided in the third section (S3) are referred to as third sensors (143a to 143c).

However, the first sensing unit (141) to the third sensing unit (143) are different only in installation positions, but have the same configuration and function, whereby in order to avoid repeating the explanation, the first sensing unit (141) will be explained as an example.

Referring to Figure 3, within the first section, the plurality of first sensors (141a to 141c) are disposed apart from each other up and down along the loading height direction (h) of the powder in the transfer pipe. The first sensors (141a to 141c) may be installed on the outer surface of the transfer pipe (130). The first sensors (141a to 141c) detect the vibration of the transfer pipe (130) when the powder is transferred.

First of all, the plurality of first sensors (141a to 141c) may be installed at a first position (P1), which is an arbitrary position in the first section (S1). The plurality of first sensors (141a to 141c) may be divided into a 1a sensor (141a) to a 1c sensor (141c) according to the installation heights.

Here, the 1a sensor (141a) may be provided toward the bottom surface of the transfer pipe (130). **In** addition, the 1b sensor (141b) may be provided at an intermediate position of the transfer pipe (130) along the loading height direction (h) of the powder in the transfer pipe (130). Then, the 1c sensor (141c) may be provided at a height farthest from the bottom surface of the transfer pipe (130) along the loading height direction (h) of the powder in (130). The distances between the respective sensors may be freely adjusted.

**In** addition, the plurality of second sensors (142a to 142c) may be installed at a second position (P2), which is an arbitrary position in the second section (S2). The plurality of second sensors (142a to 142c) may be divided into a 2a sensor (142a) to a 2c sensor (142c) according to the installation heights.

Similarly, the plurality of third sensors (143a to 143c) may be installed at a third position (P3), which is an arbitrary position in the third section (S3). The plurality of third sensors (143a to 143c) may be divided into a 3a sensor (143a) to a 3c sensor (143c) according to the installation heights.

The 1a sensor (141a), the 2a sensor (142a), and the 3a sensor (143a) may be provided at positions toward the bottom surface of the transfer pipe (130), respectively, and may be disposed apart from each other in the longitudinal direction (L) of the transfer pipe (130). Also, the 1b sensor (141b), the 2b sensor (142b), and the 3b sensor (143b) may be provided at intermediate positions along the loading height direction (h) of the powder in the transfer pipe (130), respectively, and may be disposed apart from each other in the longitudinal direction (L) of the transfer pipe (130). In addition, the 1c sensor (141c), the 2c sensor (142c), and the 3c sensor (143c) may be provided at positions farthest from the bottom surface of the transfer pipe (130) along the loading height direction (h) of the powder in the transfer pipe (130), respectively, and may be disposed apart from each other in the longitudinal direction (L) of the transfer pipe.

The first vibration unit (150a) may be installed adjacent to the first sensing unit (141) in the first section (S1). The first vibration unit (150a) provides vibration to the first section (S1) of the transfer pipe (130).

Also, the second vibration unit (150b) may be installed adjacent to the second sensing unit (142) in the second section (S2). The second vibration unit (150b) provides vibration to the second section (S2) of the transfer pipe (130).

In addition, the third vibration unit (150c) may be installed adjacent to the third sensing unit (143) in the third section (S3). The third vibration unit (150c) provides vibration to the third section (S3) of the transfer pipe (130).

The first vibration unit (150a) to the third vibration unit (150c) are different only in installation positions, but have the same configuration and function, and as the first vibration unit (150a) to the third vibration unit (150c), various types of vibrators may be used.

Referring to Figure 2, the control part (160) may comprise a data collection part (161) for collecting vibration data of the sensing unit, upon powder transfer, a section classification part (162) for classifying a normal section and an abnormal section for each section of the transfer pipe (130), a monitoring part (164) displaying loading height information of the powder under transfer for each section of the transfer pipe (130), a loading amount adjusting part (165), and a pump adjusting part (166).

The operations of the first vibration unit (150a) to the third vibration unit (150c) may be individually controlled by a vibration adjusting part (163). Then, the first vibration unit (150a) to the third vibration unit (150c) are provided so that the vibration intensity may be adjusted by the vibration adjusting part (163).

In addition, the control part (160) may determine and classify each section as a "normal section" or "abnormal section" according to the transfer state of the powder based on the preset normal vibration data and the vibration data obtained from the sensing unit, and may individually control the operation of the vibration unit installed in the abnormal section.

Referring to Figure 3, as one example, the plurality of levels may be set along the loading height direction of the powder in the transfer pipe (130), and may be set by dividing them the "normal level" and "abnormal level" based on the loading height (h1) of the powder to the total height (h).

The normal level (L2) may be defined as a relative height (h1/h) within the range of 0.5h to 0.7h of the total height (h) of the transfer pipe (130). The abnormal level (L3, see Figure 3) may be a level having a height exceeding the relative height. The reference level (L1, see Figure 3) may correspond to the height of the bottom surface of the transfer pipe (130).

Here, the reference level may be set to Level 1 (L1), and the 1a sensor (141a) to the 3a sensor (143a) may be provided to detect the vibration of the transfer pipe (130) at a position corresponding to Level 1, which is the reference level.

The normal level may be set to Level 2 (L2), and the 1b sensor (141b) to the 3b sensor (143b) may be provided to detect the vibration of the transfer pipe (130) at a position corresponding to Level 2 (L2).

In addition, the abnormal level may be set to Level 3 (L3), which corresponds to a position where the relative height of the transfer pipe (130) to the bottom surface (131) is higher than that of Level 2 (L2). The 1c sensor (141c) to the 3c sensor (143c) may be provided to detect the vibration of the transfer pipe (130) at a position corresponding to Level 3 (L3).

In another example, referring to Figure 4, 10 sensors (141a to 141j, 142a to 142j, 143a to 143j) may be disposed apart from each other in the loading height direction (h) of the powder (P) based on the bottom surface (131) of the transfer pipe (130), and the plurality of levels may be divided into Level 1 (L1) to Level 10 (L10). Figure 4 is an example of subdividing level units into 10, where the operation method of the powder transfer system (100) is the same as that of Figure 3.

Referring to Figure 4, the plurality of levels may be subdivided into 10 levels, and the relative height of 0.5h to the total height (h) may be set to the control part (160) as the normal level. In this case, the normal level range may be set to Level 1 (L1) to Level 5 (L5), and the abnormal level range may be set to Level 6 (L6) to Level 10 (L10).

On the basis of the detected vibration data, the control part (160) may calculate the level as a ratio (h1/h) of the powder loading height (h1) to the bottom surface (131) based on the total height (h) of the transfer pipe (130) for each section (S1 to S3). Then, when the calculated level is determined to be the abnormal level, the control part (160) may classify the relevant section as the abnormal section, and may operate any one vibration unit installed in the abnormal section. Also, the control part (160) may adjust the vibration intensity while operating the vibration unit.

Referring to Figure 2, the data collection part (161) collects vibration data sensed by each sensor for each section (S1, S2, S3) of the transfer pipe (130).

The section classification part (162) performs a function of receiving vibration data from the data collection part (161) to classify a normal section and an abnormal section for each section (S1 to S3) based on the vibration data.

Also, the vibration adjusting part (163) performs a function of individually controlling each vibration unit to apply vibration to an abnormal section based on the classification information of the section classification part (162). The vibration adjusting part (163) may control the vibration unit so that the vibration intensity increases as the powder loading height is higher than the normal loading height.

In addition, the monitoring part (164) performs a function of dividing the powder transfer state information into "normal" and "abnormal" in the longitudinal direction (L) of the transfer pipe (130) based on the information classified by the section classification part (162) to display it. Accordingly, through the monitoring part (164), it is possible to monitor the powder transfer state in real time.

Meanwhile, the powder input part (110) is installed on one side of the transfer pipe (130) to supply the powder to the transfer pipe (130). The powder input part (110) comprises a hopper. A vibrating member (111) may be installed in the powder input part (110). The vibrating member (111) is provided to apply the vibration to the powder input part (110), and accordingly, it is possible to prevent a phenomenon that the powder is agglomerated on the inner surface of the powder input part (110).

Also, a first on-off valve (115) is provided at the outlet of the powder input part (110). The opening and closing operation of the first on-off valve (115) is controlled by the control part (160). The control part (160) may control the input amount of the powder supplied to the transfer pipe (130) by controlling the first on-off valve (115). Specifically, the control part (160) may adjust the input amount of the powder input into the transfer pipe (130) by adjusting the opening and closing of the first on-off valve (115) installed in the powder input part (110) through the loading amount adjusting part (165).

In addition, a metering hopper (120) is installed on the other side of the transfer pipe (130), and the powder transferred along the transfer pipe (130) is accommodated therein. In addition, a vibrating member (121) is installed in the metering hopper (120).

Furthermore, a vacuum pump (170) is installed between the metering hopper (120) and the transfer pipe (130). The operation of the vacuum pump (170) is controlled by a pump adjusting part (166). The vacuum pump (170) applies a vacuum pressure to the transfer pipe (130) to operate so that the powder is transferred from the powder input part (110) to the metering hopper (120) along the transfer pipe (130).

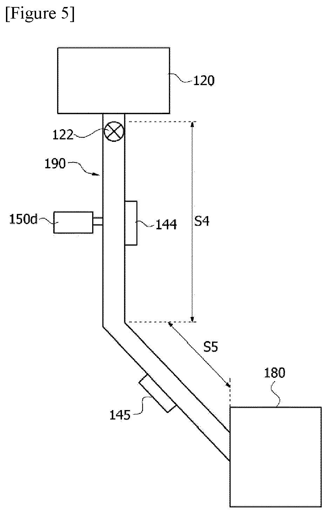

Figure 5 is a schematic diagram showing the metering hopper (120) and the mixing part (180) of the powder transfer system.

In addition, the metering hopper (120) is connected to the mixing part (180) via a supply pipe (190). The vibrating member (121) applying the vibration to the metering hopper (120) may be installed at the outlet side of the metering hopper (120). The metering hopper (120) measures the powder in a volume preset in the control part (160) to supply it to the mixing part (180) where raw materials constituting the slurry are mixed.

Referring to Figure 5, the system (100) may comprise the supply pipe (190) into which the powder measured in the metering hopper (120) is introduced, and the mixing part (180) connected to the supply pipe (190).

Also, the supply pipe (190) may have a plurality of sections (S4, S5) along the transfer direction of the powder toward the mixing part (180).

In addition, the system (100) may comprise a plurality of sensing units (144, 145) provided for each section (S4, S5) of the supply pipe (190), and provided to detect vibration of the supply pipe (190) upon powder transfer for each section (S4, S5), and a vibration unit (150d) provided to apply vibration to a section (S4) adjacent to the metering hopper (120) among the plurality of sections (S4, S5).

Furthermore, the control part (160) may be provided to control the operation of the vibration unit (150d) of the supply pipe (190) based on the vibration data obtained for each section in the supply pipe (190).

In addition, a second on-off valve (122) is provided on the outlet side of the metering hopper (120). The opening and closing operation of the second on-off valve (122) is controlled by the control part (160). The control part (160) may adjust the input amount of the powder supplied to the supply pipe (190) by controlling the second on-off valve (122).

The preferred examples of the present invention as described above have been disclosed for illustrative purposes, and those skilled in the art having ordinary knowledge of the present invention will be able to make various modifications, changes, and additions within the scope of the present invention, and such modifications, changes, and additions should be regarded as falling within the scope of the following claims.

### Industrial Applicability

According to the powder transfer system related to one example of the present invention, it is possible to monitor the transfer state of the powder based on the vibration data obtained from the transfer pipe during powder transfer and the preset normal vibration data, and it is possible to apply the vibration to the region of the transfer pipe determined to be the abnormal section.

## Claims

1. A powder transfer system (100) comprising:
a transfer pipe (130), through which powder is transferred, having a plurality of sections along the powder transfer direction (M);
a plurality of sensing units (141, 142, 143) provided for each section of the transfer pipe (130);
a plurality of vibration units (150a, 150b, 150c) provided to apply vibration to each section of the transfer pipe (130); and **characterized in that**:
the plurality of sensing units (141, 142, 142) is provided to detect vibration of the transfer pipe when the powder is transferred for each section, and
a control part (160) is provided to individually control operation of the vibration unit (150a, 150b, 150c) for each section of the transfer pipe (130) based on vibration data obtained from the sensing unit (141, 142, 143) for each section of the transfer pipe (130); the sensing unit (141, 142, 143) comprises a plurality of vibration sensors disposed apart from each other along a loading height direction (h) of the powder for each section of the transfer pipe (130) when the powder is transferred,
the plurality of vibration sensors is provided at different heights, respectively, based on the bottom surface (131) of the transfer pipe (130), and
the control part (160) is provided to control the operation of the vibration unit provided in the relevant section based on a result of comparing the vibration data obtained from the plurality of vibration sensors in the section and the normal vibration data for each height stored in advance.

2. The powder transfer system (100) according to claim 1, wherein
the control part (160) is provided to control the operation of the vibration unit (150a, 150b, 150c) for each section of the transfer pipe (130) based on a result of comparing the vibration data obtained from the sensing unit (141, 142, 143) for each section and the normal vibration data for each section stored in advance.

3. The powder transfer system (100) according to claim 1, wherein
the control part (160) is provided so that the loading height (h1) of the powder under transfer is calculated based on vibration data obtained from the plurality of vibration sensors provided along the loading height direction (h) of the powder in the relevant section, and the operation of the vibration unit (150a, 150b, 150c) is controlled according to the calculated height.

4. The powder transfer system (100) according to claim 3, wherein
the control part (160) is provided to adjust a vibration intensity of the vibration unit (150a, 150b, 150c) based on the difference between the calculated powder loading height (h1) and the preset normal loading height.

5. The powder transfer system (100) according to claim 4, wherein
the control part (160) increases the vibration intensity of the vibration unit (150a, 150b, 150c) in proportion to the difference between the calculated powder loading height (h1) and the preset normal loading height.

6. The powder transfer system (100) according to claim 5, wherein
the normal loading height is a height within a range of 50% (0.5h) to 70% (0.7h) of the total height (h) based on the bottom surface (131) of the transfer pipe (130).

7. The powder transfer system (100) according to claim 3, further comprising
a monitoring part (164) displaying loading height information of the powder under transfer for each section of the transfer pipe (130).

8. The powder transfer system (100) according to claim 1, wherein
the vibration unit (150a, 150b, 150c) is an ultrasonic vibration vibrator.

9. The powder transfer system (100) according to claim 1, further comprising:
a powder input part (110) supplying the powder to the transfer pipe (130);
a metering hopper (120) accommodating the powder transferred along the transfer pipe (130); and
a vacuum pump (170) provided between the metering hopper (120) and the transfer pipe (130) and applying a vacuum pressure to the transfer pipe (130) so that the powder is transferred to the metering hopper (120) along the transfer pipe (130).

10. The powder transfer system (100) according to claim 9, wherein
the control part (160) is provided to adjust the transfer speed of the powder by adjusting the strength of the vacuum pressure of the vacuum pump (170).

11. The powder transfer system (100) according to claim 9, further comprising
a first on-off valve (115) provided between the powder input part (110) and the transfer pipe (130), wherein
the control part (160) adjusts the input amount of the powder supplied to the transfer pipe (130) by controlling the first on-off valve (115).

12. The powder transfer system (100) according to claim 9, further comprising
a supply pipe (190) into which the powder measured in the metering hopper (120) is introduced; and
a mixing part (180) connected to the supply pipe (190), wherein
the supply pipe (190) has a plurality of sections along the transfer direction of the powder toward the mixing part (180).

13. The powder transfer system (100) according to claim 12, further comprising:
a plurality of sensing units (141, 142, 143) provided for each section of the supply pipe (190), and provided to detect vibration of the supply pipe (190) upon powder transfer for each section; and
a vibration unit (150a, 150b, 150c) provided to apply vibration to a section adjacent to the metering hopper (120) among the plurality of sections.

14. The powder transfer system (100) according to claim 13, wherein
the control part (160) is provided to control the operation of the vibration unit (150a, 150b, 150c) of the supply pipe (190) based on the vibration data obtained for each section in the supply pipe (190).

## Patentansprüche

1. Pulverfördersystem (100) umfassend:
ein Förderrohr (130), durch das Pulver gefördert wird, mit einer Mehrzahl von Abschnitten entlang der Pulverförderrichtung (M);
eine Mehrzahl von Abtasteinheiten (141, 142, 143), die für jeden Abschnitt des Förderrohrs (130) bereitgestellt sind;
eine Mehrzahl von Vibrationseinheiten (150a, 150b, 150c), die bereitgestellt sind, um auf jeden Abschnitt des Förderrohrs (130) Vibration auszuüben;
und **dadurch gekennzeichnet, dass**:
die Mehrzahl von Abtasteinheiten (141, 142, 142) bereitgestellt ist, um Vibration des Förderrohrs zu detektieren, wenn das Pulver für jeden Abschnitt gefördert wird, und
ein Regel-/Steuerteil (160) bereitgestellt ist, um den Betrieb der Vibrationseinheit (150a, 150b, 150c) für jeden Abschnitt des Förderrohrs (130) basierend auf Vibrationsdaten, die von der Abtasteinheit (141, 142, 143) für jeden Abschnitt des Förderrohrs (130) erhalten werden, individuell zu regeln/steuern;
die Abtasteinheit (141, 142, 143) eine Mehrzahl von Vibrationssensoren umfasst, die voneinander beabstandet entlang einer Ladehöhenrichtung (h) des Pulvers für jeden Abschnitt des Förderrohrs (130), wenn das Pulver gefördert wird, angeordnet sind,
die Mehrzahl von Vibrationssensoren jeweils in unterschiedlichen Höhen bereitgestellt ist, basierend auf der Bodenfläche (131) des Förderrohrs (130), und
der Regel-/Steuerteil (160) bereitgestellt ist, um den Betrieb der Vibrationseinheit zu regeln/steuern, die in dem relevanten Abschnitt bereitgestellt ist, basierend auf einem Ergebnis des Vergleichens der Vibrationsdaten, die von der Mehrzahl von Vibrationssensoren in dem Abschnitt erhalten werden, und der im Voraus gespeicherten normalen Vibrationsdaten für jede Höhe.

2. Pulverfördersystem (100) nach Anspruch 1, wobei
der Regel-/Steuerteil (160) bereitgestellt ist, um den Betrieb der Vibrationseinheit (150a, 150b, 150c) für jeden Abschnitt des Förderrohrs (130) zu regeln/steuern, basierend auf einem Ergebnis des Vergleichens der Vibrationsdaten, die von der Abtasteinheit (141, 142, 143) für jeden Abschnitt erhalten werden, und der im Voraus gespeicherten normalen Vibrationsdaten für jeden Abschnitt.

3. Pulverfördersystem (100) nach Anspruch 1, wobei
der Regel-/Steuerteil (160) so bereitgestellt ist, dass die Ladehöhe (h1) des Pulvers in Förderung basierend auf Vibrationsdaten berechnet wird, die von der Mehrzahl von Vibrationssensoren erhalten werden, die entlang der Ladehöhenrichtung (h) des Pulvers in dem relevanten Abschnitt bereitgestellt sind, und der Betrieb der Vibrationseinheit (150a, 150b, 150c) entsprechend der berechneten Höhe geregelt/gesteuert wird.

4. Pulverfördersystem (100) nach Anspruch 3, wobei
der Regel-/Steuerteil (160) bereitgestellt ist, um eine Vibrationsintensität der Vibrationseinheit (150a, 150b, 150c) basierend auf der Differenz zwischen der berechneten Pulverladehöhe (h1) und der voreingestellten normalen Ladehöhe einzustellen.

5. Pulverfördersystem (100) nach Anspruch 4, wobei
der Regel-/Steuerteil (160) die Vibrationsintensität der Vibrationseinheit (150a, 150b, 150c) proportional zu der Differenz zwischen der berechneten Pulverladehöhe (h1) und der voreingestellten normalen Ladehöhe erhöht.

6. Pulverfördersystem (100) nach Anspruch 5, wobei
die normale Ladehöhe eine Höhe innerhalb eines Bereichs von 50 % (0,5 h) bis 70 % (0,7 h) der Gesamthöhe (h) basierend auf der Bodenfläche (131) des Förderrohrs (130) ist.

7. Pulverfördersystem (100) nach Anspruch 3, ferner umfassend
einen Überwachungsteil (164), der Ladehöheninformationen des Pulvers in Förderung für jeden Abschnitt des Förderrohrs (130) anzeigt.

8. Pulverfördersystem (100) nach Anspruch 1, wobei
die Vibrationseinheit (150a, 150b, 150c) ein Ultraschallvibrations-Vibrator ist.

9. Pulverfördersystem (100) nach Anspruch 1, ferner umfassend:
einen Pulvereinlass-Teil (110), der das Pulver dem Förderrohr (130) zuführt;
einen Dosierbehälter (120), der das entlang des Förderrohrs (130) geförderte Pulver aufnimmt; und
eine Vakuumpumpe (170), die zwischen dem Dosierbehälter (120) und dem Förderrohr (130) bereitgestellt ist und einen Vakuumdruck auf das Förderrohr (130) ausübt, so dass das Pulver entlang des Förderrohrs (130) zu dem Dosierbehälter (120) gefördert wird.

10. Pulverfördersystem (100) nach Anspruch 9, wobei
der Regel-/Steuerteil (160) bereitgestellt ist, um die Fördergeschwindigkeit des Pulvers durch Einstellen der Stärke des Vakuumdrucks der Vakuumpumpe (170) einzustellen.

11. Pulverfördersystem (100) nach Anspruch 9, ferner umfassend
ein erstes Ein-Aus-Ventil (115), das zwischen dem Pulvereinlass-Teil (110) und dem Förderrohr (130) bereitgestellt ist, wobei
der Regel-/Steuerteil (160) die Einlassmenge des Pulvers, das dem Förderrohr (130) zugeführt wird, durch Regeln/Steuern des ersten Ein-Aus-Ventils (115) einstellt.

12. Pulverfördersystem (100) nach Anspruch 9, ferner umfassend
ein Zuführrohr (190), in das das in dem Dosiertrichter (120) gemessene Pulver eingeführt wird; und
einen Mischteil (180), der mit dem Zuführrohr (190) verbunden ist, wobei
das Zuführrohr (190) eine Mehrzahl von Abschnitten entlang der Förderrichtung des Pulvers zu dem Mischteil (180) aufweist.

13. Pulverfördersystem (100) nach Anspruch 12, ferner umfassend:
eine Mehrzahl von Abtasteinheiten (141, 142, 143), die für jeden Abschnitt des Zuführrohrs (190) bereitgestellt sind, und die bereitgestellt sind, um bei Pulverförderung für jeden Abschnitt eine Vibration des Zuführrohrs (190) zu erfassen;
und eine Vibrationseinheit (150a, 150b, 150c), die bereitgestellt ist, um auf einen Abschnitt unter der Mehrzahl von Abschnitten, der an den Dosierbehälter (120) angrenzt, Vibration auszuüben.

14. Pulverfördersystem (100) nach Anspruch 13, wobei
der Regel-/Steuerteil (160) bereitgestellt ist, um den Betrieb der Vibrationseinheit (150a, 150b, 150c) des Zuführrohrs (190) basierend auf den für jeden Abschnitt in dem Zuführrohr (190) erhaltenen Vibrationsdaten zu regeln/steuern.

## Revendications

1. Système de transfert de poudre (100) comprenant :
un tuyau de transfert (130), à travers lequel de la poudre est transférée, ayant une pluralité de sections le long de la direction de transfert de poudre (M) ;
une pluralité d'unités de détection (141, 142, 143) prévues pour chaque section du tuyau de transfert (130) ;
une pluralité d'unités de vibration (150a, 150b, 150c) prévues pour appliquer une vibration à chaque section du tuyau de transfert (130) ; et **caractérisé en ce que** :
la pluralité d'unités de détection (141, 142, 143) est prévue pour détecter la vibration du tuyau de transfert lorsque la poudre est transférée pour chaque section, et
une partie de commande (160) est prévue pour commander individuellement le fonctionnement de l'unité de vibration (150a, 150b, 150c) pour chaque section du tuyau de transfert (130) sur la base de données de vibration obtenues à partir de l'unité de détection (141, 142, 143) pour chaque section du tuyau de transfert (130) ;
l'unité de détection (141, 142, 143) comprend une pluralité de capteurs de vibration disposés espacés les uns des autres le long d'une direction de hauteur (h) de chargement de la poudre pour chaque section du tuyau de transfert (130) lorsque la poudre est transférée,
la pluralité de capteurs de vibration est prévue à différentes hauteurs, respectivement, sur la base de la surface inférieure (131) du tuyau de transfert (130), et
la partie de commande (160) est prévue pour commander le fonctionnement de l'unité de vibration prévue dans la section concernée sur la base d'un résultat de comparaison des données de vibration obtenues à partir de la pluralité de capteurs de vibration dans la section et des données de vibration normales pour chaque hauteur stockées à l'avance.

2. Système de transfert de poudre (100) selon la revendication 1, dans lequel
la partie de commande (160) est prévue pour commander le fonctionnement de l'unité de vibration (150a, 150b, 150c) pour chaque section du tuyau de transfert (130) sur la base d'un résultat de comparaison des données de vibration obtenues à partir de l'unité de détection (141, 142, 143) pour chaque section et des données de vibration normales pour chaque section stockées à l'avance.

3. Système de transfert de poudre (100) selon la revendication 1, dans lequel
la partie de commande (160) est prévue de sorte que la hauteur de chargement (h1) de la poudre en cours de transfert soit calculée sur la base de données de vibration obtenues à partir de la pluralité de capteurs de vibration prévus le long de la direction de hauteur (h) de chargement de la poudre dans la section concernée, et le fonctionnement de l'unité de vibration (150a, 150b, 150c) est commandé conformément à la hauteur calculée.

4. Système de transfert de poudre (100) selon la revendication 3, dans lequel
la partie de commande (160) est prévue pour ajuster une intensité de vibration de l'unité de vibration (150a, 150b, 150c) sur la base de la différence entre la hauteur de chargement (h1) de poudre calculée et la hauteur de chargement normale prédéfinie.

5. Système de transfert de poudre (100) selon la revendication 4, dans lequel
la partie de commande (160) augmente l'intensité de vibration de l'unité de vibration (150a, 150b, 150c) proportionnellement à la différence entre la hauteur de chargement (h1) de poudre calculée et la hauteur de chargement normale prédéfinie.

6. Système de transfert de poudre (100) selon la revendication 5, dans lequel
la hauteur de chargement normale est une hauteur dans une plage de 50 % (0,5 h) à 70 % (0,7 h) de la hauteur (h) totale sur la base de la surface inférieure (131) du tuyau de transfert (130).

7. Système de transfert de poudre (100) selon la revendication 3, comprenant en outre une partie de surveillance (164) affichant des informations de hauteur de chargement de la poudre en cours de transfert pour chaque section du tuyau de transfert (130).

8. Système de transfert de poudre (100) selon la revendication 1, dans lequel l'unité de vibration (150a, 150b, 150c) est un générateur de vibration ultrasonore.

9. Système de transfert de poudre (100) selon la revendication 1, comprenant en outre :
une partie d'entrée de poudre (110) alimentant en poudre le tuyau de transfert (130) ;
une trémie de dosage (120) recevant la poudre transférée le long du tuyau de transfert (130) ; et
une pompe à vide (170) prévue entre la trémie de dosage (120) et le tuyau de transfert (130) et appliquant une pression à vide au tuyau de transfert (130) de sorte que la poudre soit transférée vers la trémie de dosage (120) le long du tuyau de transfert (130).

10. Système de transfert de poudre (100) selon la revendication 9, dans lequel
la partie de commande (160) est prévue pour ajuster la vitesse de transfert de la poudre en ajustant la force de la pression à vide de la pompe à vide (170).

11. Système de transfert de poudre (100) selon la revendication 9, comprenant en outre une première vanne tout ou rien (115) prévue entre la partie d'entrée de poudre (110) et le tuyau de transfert (130), dans lequel
la partie de commande (160) ajuste la quantité d'entrée de la poudre fournie au tuyau de transfert (130) en commandant la première vanne tout ou rien (115).

12. Système de transfert de poudre (100) selon la revendication 9, comprenant en outre un tuyau d'alimentation (190) dans lequel la poudre mesurée dans la trémie de dosage (120) est introduite ; et
une partie de mélange (180) reliée au tuyau d'alimentation (190), dans lequel
le tuyau d'alimentation (190) a une pluralité de sections le long de la direction de transfert de la poudre vers la partie de mélange (180).

13. Système de transfert de poudre (100) selon la revendication 12, comprenant en outre :
une pluralité d'unités de détection (141, 142, 143) prévues pour chaque section du tuyau d'alimentation (190), et prévues pour détecter la vibration du tuyau d'alimentation (190) lors du transfert de poudre pour chaque section ; et
une unité de vibration (150a, 150b, 150c) prévue pour appliquer une vibration à une section adjacente à la trémie de dosage (120) parmi la pluralité de sections.

14. Système de transfert de poudre (100) selon la revendication 13, dans lequel
la partie de commande (160) est prévue pour commander le fonctionnement de l'unité de vibration (150a, 150b, 150c) du tuyau d'alimentation (190) sur la base des données de vibration obtenues pour chaque section dans le tuyau d'alimentation (190).
